# EUROPEAN PATENT APPLICATION

(11) **EP 4 761 174 A1**
(43) Date of publication of application: **17.06.2026**
(21) Application number: 24218638.5
(22) Date of filing: 10.12.2024
(51) Int. Cl.: H04L 9/40, H04L 9/08

(54) **METHODS OF NETWORKING DEVICES**

(71) Applicant: Nokia Solutions and Networks Oy, 02610 Espoo (FI)
(72) Inventor: Bidgoli, Hooman, Ottawa, K2T 0E4 (CA)
(74) Representative: Bryers Intellectual Property Ltd

(57) **Abstract**

A method of a networking device is disclosed comprising: (a) establishing a Media Access Control security (MACsec) key agreement (MKA) session with another networking device; (b) generating a pre-shared key (PSK); (c) distributing the PSK generated in step (b) to the other networking device; and, optionally, (d) establishing a new MKA session using the PSK generated in step (b) to secure the new MKA session.

## Description

### Field of the Invention

The present invention relates to methods of networking devices and corresponding network devices, computer programs and non-transitory computer readable media; and, in particular, for establishing Media Access Control security (MACsec) key agreement (MKA) sessions.

### Background to the Invention

Pursuant to IEEE-802.1X-2020, an MKA session can be established for peer authentication, key exchange and the establishment of Secure Associations (SA). Conventionally, this is done with an initial pre-shared key (PSK) which can be shared by, for example, user configuration using a command line interface (CLI) or using external hardware like Nokia's 1830 Security Management Server (SMS) or Quantum Key Distribution (QKD) hardware which can program a PSK on a router via a remote connection such as Simple Network Management Protocol version 3 (SNMPv3).

### Summary of the Invention

In accordance with the present invention, there is provided methods of networking devices and corresponding network devices, computer programs and non-transitory computer readable media as claimed in the accompanying claims.

According to a first example embodiment, a method of a networking device is provided comprising: (a) establishing a Media Access Control security (MACsec) key agreement (MKA) session with another networking device; (b) generating a pre-shared key (PSK); and (c) distributing the PSK generated in step (b) to the other networking device.

Such a method may further comprise: (d) establishing a new MKA session using the PSK generated in step (b) to secure the new MKA session. Where this is the case, the new MKA session may be secured by the PSK generated in step (b) with a corresponding Secure Association Key, SAK. Furthermore, steps (b) to (d) may be repeated including periodically and when triggered by a user and/or a security event.

The or each PSK may be distributed using the 'Distributed CAK' parameter set. Where this is the case, the or each PSK may consist of a pairwise Connectivity Association Key, CAK, and a corresponding CAK name, CKN, both distributed using the 'Distributed CAK' parameter set.

At least two PSKs may be generated in step (b) and distributed in step (c) using the same MKA session. Also the or each PSK may be generated in step (b) using a random number generator of the networking device.

According to a second example embodiment, a method of a networking device is provided comprising: (a) establishing an MKA session with another networking device; and (b) receiving a PSK generated by the other networking device.

Such a method may further comprise: (c) establishing a new MKA session using the PSK received in step (b) to secure the new MKA session. Where this is the case, the new MKA session may be secured by the PSK received in step (b) with a corresponding SAK. Furthermore, steps (b) and (c) may be repeated including periodically and when triggered by a user and/or a security event.

The or each PSK may be received using the 'Distributed CAK' parameter set. Where this is the case, the or each PSK may consist of a CAK and a corresponding CAK name, both received using the 'Distributed CAK' parameter set.

At least two PSKs may be received in step (b) using the same MKA session.

In respect of both these first and second example embodiments, the method may further comprise receiving an initial PSK, wherein the initial PSK is used to establish the MKA session in step (a). Where this is the case, the initial PSK may be provided by at least one of: a management interface, a Command Line Interface (CLI) and a Simple Network Management Protocol (SNMP) interface or alike interface like Netconf or GNMI or any management interface.

The method may further comprise using the initial PSK as a backup to establish a new MKA session in the event of a failure to establish an MKA session or in the event of a device reboot. PSKs may be stored in a non-volatile memory including in an encrypted format. Also, the method may further comprise logging and/or notifying an external entity of in the event that use of a further PSK fails to establish an MKA session.

The MKA sessions may accord with IEEE 802.1X-2010 'IEEE Standard for Local and metropolitan area networks--Port-Based Network Access Control', or derivates thereof. Also, such methods may be executed by a router.

In respect of a third example embodiment, a networking device is provided comprising: at least one processor; and at least one memory storing instructions that, when executed by the at least one processor, causes the device to perform an aforementioned method.

In respect of a fourth example embodiment, a computer program is provided comprising instructions which, when executed by an apparatus, cause the apparatus to perform an aforementioned method.

In respect of a fifth example embodiment, a non-transitory computer readable medium is provided comprising program instructions that, when executed by an apparatus, cause the apparatus to perform an aforementioned method.

### Brief Description of the Drawings

Example embodiments will now be described with reference to the accompanying figures in which:
Figure 1 illustrates an example of encrypted data exchange using a conventional MACsec Key Agreement Protocol (MKA) of IEEE 802.1X-2010;
Figure 2 illustrates an example of encrypted data exchange according to the present invention;
Figures 3 and 4 illustrate example embodiment of methods of network devices; and
Figure 5 is a simplified block diagram illustrating a device that is suitable for implementing example embodiments of the present disclosure.

### Detailed Description of Embodiments

The principle of the present disclosure will now be described with reference to some example embodiments. It is to be understood that these example embodiments are described only for the purpose of illustration and help those skilled in the art to understand and implement the present disclosure, without suggesting any limitation as to the scope of the disclosure. The disclosure described herein can be implemented in various manners other than the ones described below.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

IEEE 802.1AE (also known as MACsec) is a network security standard that operates at the medium access control (MAC) layer and defines connectionless data confidentiality and integrity for media access independent protocols. For example, MACsec can provide point-to-point security on Ethernet links. MACsec is based on Connectivity Associations (CAs) for groups of Stations connected by unidirectional Secure Channels (SCs). SCs can be secured by one or more Security Associations (SAs). Key management and the establishment of SAs is outside the scope of IEEE 802.1AE, but is specified by the MACsec Key Agreement Protocol (MKA) of IEEE 802.1X-2010.

The root of the key hierarchy for any given instance of MKA is a secure Connectivity Association Key (CAK). Every MACsec peer must be in possession of the same CAK for the connectivity association. The CAK (typically a 64 HEX-CHAR ) is uniquely identified via the Connectivity Association key name (CKN). The CAK and CKN form the pre-shared key (PSK). Each CAK identified by its secure Connectivity Association Key Name (CKN) that allows each of the MKA participants to select which CAK, or CAK derived key, to use to process a received MACsec key agreement Protocol Data unit (MKPDU).MKA does not use this CAK directly, it derives two further keys: an Integrity Check Value (ICV) Key (ICK) which is used to verify the integrity of MKPDUs and a Key Encrypting Key (KEK) which is used together with AES Key wrap to secure and distribute Secure Association Keys (SAKs).

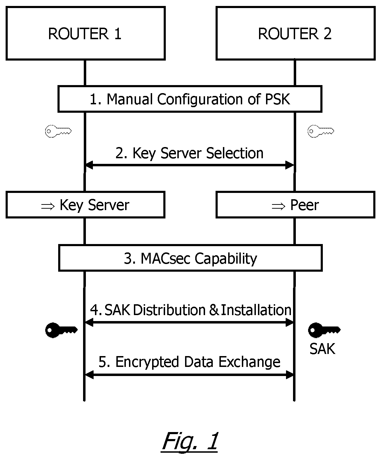

A conventional MKA process is illustrated in figure 1.

Step 1: Outside IEEE 802.1X-2010, a PSK is shared between Router 1 and Router 2. For example, this may be done by user configuration using a command line interface (CLI) or using external hardware like Nokia's 1830 Security Management Server (SMS) or Quantum Key Distribution (QKD) hardware which can program a PSK on a router via a remote connection such as Simple Network Management Protocol version 3 (SNMPv3) or management interfaces alike.

Step 2: A key server is selected between the routers, based on MKA key server priority.

Step 3: MACsec capability is exchanged from the peer to the MACsec server and the peer is identified as potential peer by the server.

Step 4: The key server generates the SAK and secures the SAK via CAK and CAMC AES (Key wrapper) and distributes it to the peer. Thereafter, the SAK is installed on the datapath by PEER the PEER indicates the SAK Installed to the key server.

Step 5: At this point the SAK is installed by the key server and the peer so secure MACsec datapath exchange can happen.

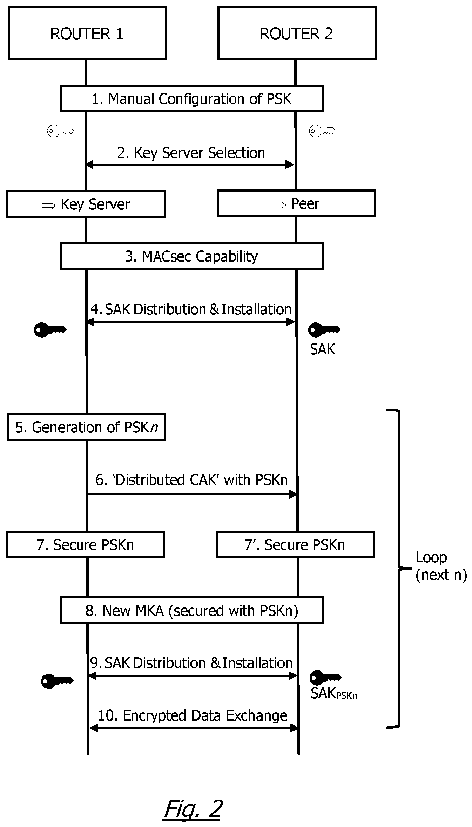

In accordance with the present invention, encrypted data exchange between routers is provided for as illustrated in figure 2.

Steps 1-4. As with the method of figure 1, a preliminary PSK is configure via CLI or external hardware. An MKA is established based on the PSK shared in step 1 (corresponding to steps 2 to 3 of figure 1) facilitating encrypted secrete exchange between the routers and negotiating the key server and MACsec capabilities. Step 4 would be optional if there was no planned encrypted data exchange during the MKA session.

Step 5. Router 1 (key server) generates a PSKn. Assuming that the router random number generator (RNG) is certified and/or has a high entropy (256 bit or better entropy), the router itself can generate both PSK components (CAK and CKN). In particular, the RNG can generate the CAK that is used to generate encryption and authentication keys as per IEEE802.1X 2010 section "9.3.3 Derived keys" to secure the SAK.

Step 6. Router 1 (key server) transmits to Router 2 PSKn as part of the 'Distributed CAK' parameter set, using the existing MKA session to distribute the PSK in secure manner for next MKA session. This can be the manually configured PSK of step 1 or, when step 5 is looped, a earlier generated PSK.

Step 7, 7'. Both Router 1 and Router 2 securely store PSKn, for example, encrypted via AES256 so they are not generally accessible and also stored in non-volatile memory so as to survive reboots.

Step 8. A new MKA is established based on PSKn shared in step 4 facilitating encrypted data and secret exchange between the routers. Steps 3 to 6 can be repeated, providing repeated MKAs based on PSKs created and shared in a previous MKA.

Step 9. The router can generate a SAK using the same RNG for PSK generation and use the MKA and PSK in step 6 to distribute the SAK

Step 10: As per figure 1 when the SAK install arrives from Router2 (PEER) Encrypted data can be exchanged between the routers.

In the event that an auto-generated PSKn becomes corrupted or unsynchronised between the routers, it would be possible to revert to the initial PSK or a previous PSKn for emergency recovery and establishment of an MKA session. Indeed, one or both routers may have a function to force the routers to use the initial PSK or a previous PSKn for emergency recovery.

It may be desirable for step 5 to be conducted immediately after steps 2-4. Also, it may be desirable for the initial PSK to not be used to secure the initial SAK since the initial PSK can have a low entropy if user configured.

It may be desirable to generate and share multiple PSKns in an MKA session.

In so far as repeated MKA sessions are concerned, PSK auto-generation and distribution is ideally periodic and, in particular, where the period must be user configurable. This may be from min to hours, days or weeks depending on the security need of the network. Furthermore, it may be possible to trigger repetition manually (e.g. with a dedicated button) if a user considers refreshing necessary.

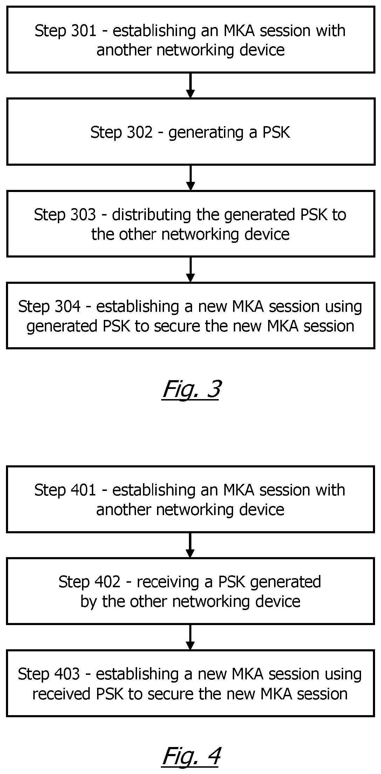

Figure 3 illustrates an example embodiment of a method of a network device comprising: establishing an MKA session with another networking device (step 301); generating a PSK (step 302); distributing the generated PSK to the other networking device via previous PSK and MKA session (step 303); and establishing a new MKA session and use the new PSK to secure secretes distributed via the new MKA session (step 304).

Figure 4 illustrates a further example embodiment of a method of a network device comprising: establishing an MKA session with another networking device (step 401); (b) receiving a PSK generated by the other networking device (step 402); and (c) establishing a new MKA session using the received PSK to secure the new MKA session (step 403).

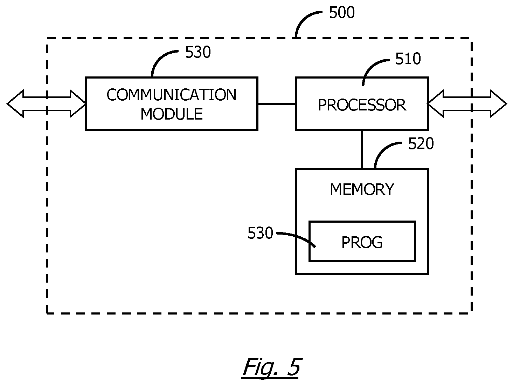

Figure 5 is a simplified block diagram of a network device 500 that is suitable for implementing example embodiments of the present disclosure. The device 500 can be implemented at or as a part of a router. As shown, the device 500 includes a processor 510, a memory 520 coupled to the processor 510, a communication module 530 coupled to the processor 510, and a communication interface (not shown) coupled to the communication module 530. The memory 520 stores at least a program 540. The communication module 530 is for bidirectional communications. The communication interface may represent any interface that is necessary for communication. The program 540 is assumed to include program instructions that, when executed by the associated processor 510, enable the device 500 to operate in accordance with the example embodiments of the present disclosure, as discussed herein with reference to figures 1 to 4. The example embodiments herein may be implemented by computer software executable by the processor 510 of the device 500, or by hardware, or by a combination of software and hardware. The processor 510 may be configured to implement various example embodiments of the present disclosure. The memory 520 may be of any type suitable to the local technical network and may be implemented using any suitable data storage technology, such as a non-transitory computer readable storage medium, semiconductor based memory devices, magnetic memory devices and systems, optical memory devices and systems, fixed memory and removable memory, as non-limiting examples. While only one memory 520 is shown in the device 500, there may be several physically distinct memory modules in the device 500. The processor 510 may be of any type suitable to the local technical network, and may include one or more of general purpose computers, special purpose computers, microprocessors, digital signal processors (DSPs) and processors based on multicore processor architecture, as non-limiting examples.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Generally, various example embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of example embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods of figures 3 and 4. Generally, program modules include routines, programs, libraries, objects, classes, components, data structures, or the like that perform particular tasks or implement particular abstract data types. The functionality of the program modules may be combined or split between program modules as desired in various example embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable media.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), Digital Versatile Disc (DVD), an optical storage device, a magnetic storage device, or any suitable combination of the foregoing.

Various example embodiments of the techniques have been described. In addition to or as an alternative to the above, the following examples are described. The features described in any of the following examples may be utilized with any of the other examples described herein.

## Claims

1. A method of a networking device comprising:
(a) establishing a Media Access Control security (MACsec) key agreement (MKA) session with another networking device;
(b) generating a pre-shared key (PSK); and
(c) distributing the PSK generated in step (b) to the other networking device.

2. A method according to claim 1, further comprising:
(d) establishing a new MKA session using the PSK generated in step (b) to secure the new MKA session.

3. A method according to claim 2, wherein the new MKA session is secured by the PSK generated in step (b) with a corresponding Secure Association Key, SAK.

4. A method according to claim 2 or claim 3, wherein the steps (b) to (d) are repeated.

5. A method according to claim 4, wherein the steps (b) to (d) are periodically repeated.

6. A method according to claim 4, wherein the steps (b) to (d) are repeated when triggered by a user and/or a security event.

7. A method according to any preceding claim, wherein the or each PSK is distributed using the 'Distributed CAK' parameter set.

8. A method according to claim 7, wherein the or each PSK consists of a Connectivity Association Key, CAK, and a corresponding CAK name, CKN, both distributed using the 'Distributed CAK' parameter set.

9. A method according to any preceding claim, wherein at least two PSKs are generated in step (b) and distributed in step (c) using the same MKA session.

10. A method according to any preceding claim, wherein the or each PSK is generated in step (b) using a random number generator of the networking device.

11. A method of a networking device comprising:
(a) establishing an MKA session with another networking device; and
(b) receiving a PSK generated by the other networking device.

12. A method according to claims 11, further comprising:
(c) establishing a new MKA session using the PSK received in step (b) to secure the new MKA session.

13. A method according to claim 12, wherein the new MKA session is secured by the PSK received in step (b) with a corresponding SAK.

14. A method according to claim 12 or claim 13, wherein steps (b) and (c) are repeated.

15. A method according to claim 14, wherein steps (b) and (c) are periodically repeated.

16. A method according to claim 15, wherein steps (b) and (c) are repeated when triggered by a user and/or a security event.

17. A method according to any of claims 11 to 16, wherein the or each PSK is received using the 'Distributed CAK' parameter set.

18. A method according to claim 17, wherein the or each PSK consists of a CAK and a corresponding CAK name, both received using the 'Distributed CAK' parameter set.

19. A method according to any of claims 11 to 18, wherein at least two PSKs are received in step (b) using the same MKA session.

20. A method according to any preceding claim, further comprising receiving an initial PSK, wherein the initial PSK is used to establish the MKA session in step (a).

21. A method according to claim 20, wherein the initial PSK is provided by at least one of: a management interface, a Command Line Interface (CLI) and a Simple Network Management Protocol (SNMP) interface.

22. A method according to any of claims 20 and 21, further comprising using the initial PSK as a backup to establish a new MKA session in the event of a failure to establish an MKA session or in the event of a device reboot.

23. A method according to any preceding claim, wherein the MKA sessions accord with IEEE 802.1X-2010, or derivates thereof.

24. A method according to any preceding claim, further comprising storing the PSKs in a non-volatile memory.

25. A method according to claim 24, wherein the PSKs are stored in a non-volatile memory in an encrypted format.

26. A method according to any preceding claims, further comprising logging and/or notifying an external entity of in the event that use of a further PSK fails to establish an MKA session.

27. A method according to any preceding claim, wherein the method is executed by a router

28. Apparatus comprising:
at least one processor; and
at least one memory storing instructions that, when executed by the at least one processor, causes the apparatus to perform a method according to any preceding claims.

29. A computer program comprising instructions which, when executed by an apparatus, cause the apparatus to perform a method according to any of claims 1 to 27.

30. A non-transitory computer readable medium comprising program instructions that, when executed by an apparatus, cause the apparatus to perform a method according to any of claims 1 to 27.
